# EUROPÄISCHE PATENTANMELDUNG

(11) **EP 2 614 917 A1**
(43) Veröffentlichungstag der Anmeldung: **17.07.2013**
(21) Anmeldenummer: 12150579.6
(22) Anmeldetag: 10.01.2012
(51) Int. Cl.: B23K 26/34

(54) **Laserschweißen von nickelbasierten Superlegierungen**

(71) Anmelder: Siemens Aktiengesellschaft, 80333 München (DE); Fraunhofer Gesellschaft zur Förderung der angewandten Forschung E.V., 80686 München (DE)
(72) Erfinder: Die Erfindernennung liegt noch nicht vor

(57) **Zusammenfassung**

Durch bewusst ausgewählte Laserparameter bezüglich der Leistung des Strahldurchmessers, der Strahldurchmesserd die Massenzufuhrrate, die Verfahrgeschwindigkeit, können rissfreie artgleiche Schweißungen von nickelbasierten Superlegierungen durchgeführt werden.

## Beschreibung

Die Erfindung betrifft das Laserschweißen von nickelbasierten Substraten mittels eines Lasers, wobei Material aufgetragen wird.

Das Schweißen von Werkstoffen führt manchmal zu Rissen.

Eine solche Schweißverbindung oder Auftragsschweißung erfüllt dann nicht die erforderlichen Anforderungen, so dass es Aufgabe der Erfindung ist, dieses Problem zu lösen.

Die Aufgabe wird gelöst durch ein Laserauftragsschweißen gemäß Anspruch 1.

In den weiteren Unteransprüchen sind weitere vorteilhafte Maßnahmen aufgelistet, die beliebig miteinander kombiniert werden können, um weitere Vorteile zu erzielen.

Es zeigt
- Figur 1: schematisch eine Vorrichtung, mit der das Laserauftragsschweißen durchgeführt wird,
- Figur 2: eine Liste von Superlegierungen.

Die Figur und die Beschreibung stellen nur Ausführungsbeispiele der Erfindung dar.

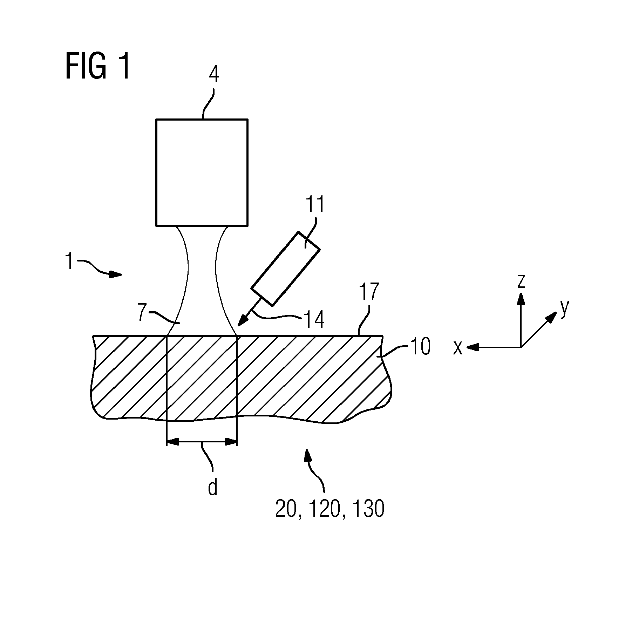

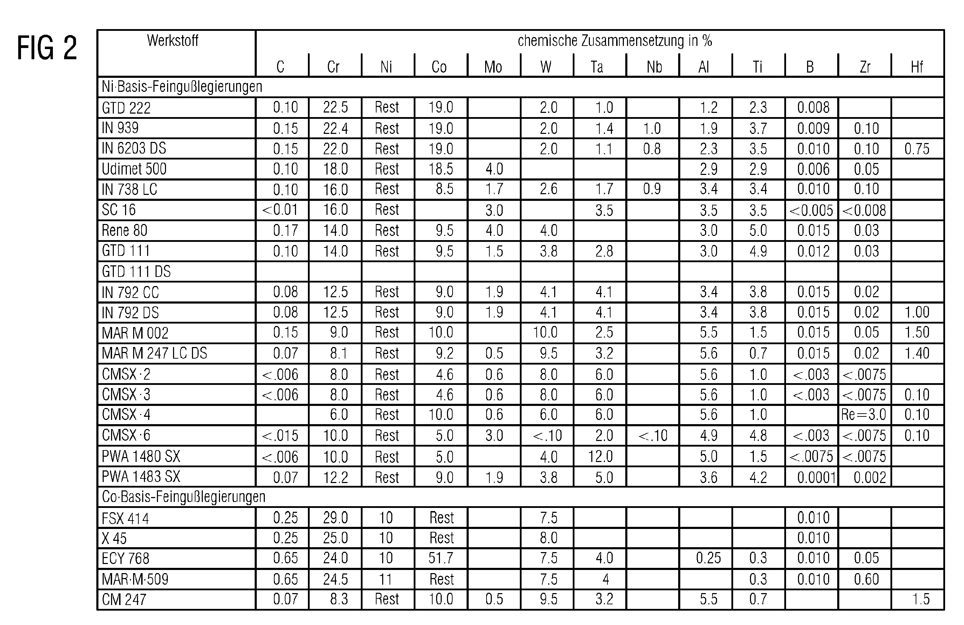

Figur 1 zeigt ein Bauteil 20, 120, 130 mit einem Substrat 10, welches eine nickelbasierte Legierung, insbesondere eine gemäß Figur 2 aufweist.

Auf die Oberfläche 17 des Substrats 10 ggf. auf einer ausgearbeiteten Stelle wird Schweißmaterial 14 aufgetragen.

Dies geschieht mittels eines Lasers 4, der mittels eines Laserstrahls 7 das aus einer Materialzufuhr 11, insbesondere Pulverzufuhr stammende Material 14, aufschmilzt.

Dabei bewegt sich der Laser 4 vorzugsweise mit einer Geschwindigkeit von 500mm/min.

Die Laserleistung beträgt vorzugsweise 80 Watt bis 120 Watt, insbesondere 100 Watt.

Der Laserstrahl 7 des Lasers 4 ist konkav gekrümmt.

Der Laserstrahldurchmesser d beträgt vorzugsweise zwischen 300µm und 400µm, insbesondere 350µm.

Der Laserstrahldurchmesser d wird auf der Oberfläche 17 gemessen.

Um generell die Wärmezufuhr in das Substrat 10 niedrig zu halten, wird vorzugsweise eine geringe Massenzufuhrrate verwendet, die zwischen 360mg/min und 450mg/min, insbesondere zwischen 370mg/min und 390mg/min liegt.

Dementsprechend liegt die Verfahrgeschwindigkeit bei 450mm/min bis 550mm/min.

Durch diese Laserparameter, der Leistung, des Strahldurchmessers, der Verfahrgeschwindigkeit und der Massenzufuhrrate wird der Energieeintrag bewusst niedrig gehalten, um Thermorisse zu vermeiden.

Durch weitere Maßnahmen können auch Risse in übereinanderliegenden Schweißlagen vermieden werden.
Zum einen geschieht dies dadurch, dass die Schweißbahnen, die nebeneinander gelegt werden und eine Schweißlage bilden, zwischen 200µm und 250µm nebeneinander liegen, das bedeutet, der Laser wird um diesen Betrag ΔY in Y-Richtung in der Ebene verschoben.

Für die nachfolgende Schweißlage, also zur Erhöhung der Dicke, wird die Fokuslage dz um 100µm bis 150µm in Z-Richtung verschoben.

Durch diese Maßnahmen werden Thermospannungen vermieden und damit auch schweißbedingte Risse.

Das Substrat 10 wird vorzugsweise bei unter 100°C geschweißt, vorzugsweise bei Raumtemperatur, wobei insbesondere eine Kühlung, ganz insbesondere ohne Steuerung durchgeführt wird.

Diese Vorgehensweise/Maßnahmen eignen sich besonders für Nickelbasislegierungen mit hohem y'-Gehalt, insbesondere für Substrate aus Rene 80, da dies die Materialien sind, die generell etwas schwieriger zu schweißen sind.
Der hohe γ'-Gehalt wird als der maximale γ'-Gehalt bei Raumtemperatur betrachtet.
Der liegt vorzugsweise bei mindestens 30 Gew.%, insbesondere im Bereich zwischen 30 Gew.% bis 50 Gew.%, ganz insbesondere bei 35 Gew.%.

Der γ'-Anteil in der Legierung wird bewirkt durch Titan (Ti) und Aluminium (Al), so dass vorzugsweise die Gehalte von Titan (Ti) und Aluminium (Al) zusammen vorzugsweise zwischen 7 Gew.% bis 9 Gew.%, insbesondere 8 Gew.% liegen.

Ebenso ist das Verfahren bei Nickelbasislegierungen mit höherem Kohlenstoffgehalt anzuwenden, der bei 0,15 Gew.% bis 0,25 Gew.% liegt.

## Patentansprüche

1. Laserauftragsschweißen von nickelbasierten Superlegierungen,
bei dem ein Durchmesser (d) des Laserstrahls (7) einen Durchmesser von 300µm bis 400µm,
insbesondere 350µm,
aufweist
und/oder
bei dem die Laserleistung zwischen 80 Watt und 120 Watt beträgt,
und/oder
bei dem die Massenzufuhrrate zwischen 360mg/min und 450mg/min beträgt,
insbesondere die Pulvermassenzufuhrrate,
ganz insbesondere bis 380mg/min,
und/oder
bei dem die Verfahrgeschwindigkeit zwischen Substrat (4) und Laserstrahl (10) 450mm/min bis 550mm/min beträgt, insbesondere 500mm/min,
und/oder
bei dem der Laser (4) um einen Betrag von 200µm bis 250µm in einer Schweißlagenebene verschoben wird,
um eine direkt benachbarte Schweißbahn zu erzeugen,
wobei mehrere nebeneinander angeordnete Schweißbahnen eine Schweißlage ergeben.

2. Verfahren nach Anspruch 1,
bei dem die Laserleistung zwischen 80 Watt und 120 Watt, insbesondere 100 Watt beträgt.

3. Verfahren nach einem oder beiden der Ansprüche 1 oder 2, bei dem die Massenzufuhrrate zwischen 360mg/min und 450mg/min beträgt,
insbesondere die Pulvermassenzufuhrrate,
ganz insbesondere 380mg/min.

4. Verfahren nach einem oder mehreren der vorhergehenden Ansprüche,
bei dem die Verfahrgeschwindigkeit zwischen Substrat (4) und Laserstrahl (10) 450mm/min bis 550mm/min beträgt, insbesondere 500mm/min.

5. Verfahren nach einem oder mehreren der Ansprüche 1 bis 4,
bei dem der Laser (4) um einen Betrag von 200µm bis 250µm in einer Schweißlagenebene verschoben wird,
um eine direkt benachbarte Schweißbahn zu erzeugen,
wobei mehrere nebeneinander angeordnete Schweißbahnen eine Schweißlage ergeben.

6. Verfahren nach einem oder mehreren der vorhergehenden Ansprüche,
bei dem der Laser (4) in Z-Richtung um 100µm bis 150µm verschoben wird,
um eine neue Schweißlage zu erzeugen.

7. Verfahren nach einem oder mehreren der vorherigen Ansprüche,
bei dem als Schweißmaterial (14) das Material des Substrats (10) verwendet wird.

8. Verfahren nach einem oder mehreren der vorherigen Ansprüche,
bei dem unter 100°C Substrattemperatur geschweißt wird, insbesondere bei Raumtemperatur.

9. Verfahren nach einem oder mehreren der vorherigen Ansprüche,
bei dem Nickelbasislegierungen mit hohem γ'-Gehalt geschweißt werden,
insbesondere mit einem γ'-Gehalt von 30Gew.% bis 50Gew.%, ganz insbesondere von 35Gew.% bis 45Gew.%.

10. Verfahren nach einem oder mehreren der vorherigen Ansprüche,
bei dem der Titan- und Aluminiumgehalt (Ti + Al) der nickelbasierten Superlegierung zusammen zwischen 7 Gew.% bis 9 Gew.%,
insbesondere 8 Gew.% beträgt.

11. Verfahren nach einem oder mehreren der vorherigen Ansprüche,
bei dem der Kohlenstoffgehalt (C) der nickelbasierten Superlegierung zwischen 0,15 Gew.% bis 2,5 Gew.%, insbesondere bei 0,17 Gew.% liegt.

12. Verfahren nach einem oder mehreren der vorherigen Ansprüche,
bei dem eine polykristalline Schweißnaht erzeugt wird.

13. Verfahren nach einem oder mehreren der vorhergehenden Ansprüche,
bei dem auf IN738 geschweißt wird.

14. Verfahren nach einem oder mehreren der vorhergehenden Ansprüche 1 bis 12,
bei dem auf Rene 80 geschweißt wird.
